(19) Europäisches Patentamt
European Patent Office
Office européen des brevets

(11) **EP 2 066 534 B1**

(12) **EUROPÄISCHE PATENTSCHRIFT**

(45) Veröffentlichungstag und Bekanntmachung des Hinweises auf die Patenterteilung:
**06.01.2010   Patentblatt 2010/01**

(51) Int Cl.:
***B60R 21/13*** *(2006.01)*      ***B60R 21/34*** *(2006.01)*

(21) Anmeldenummer: **07788160.5**

(22) Anmeldetag: **02.08.2007**

(86) Internationale Anmeldenummer:
**PCT/EP2007/057995**

(87) Internationale Veröffentlichungsnummer:
**WO 2008/034671 (27.03.2008 Gazette 2008/13)**

(54) **VORRICHTUNG UND VERFAHREN ZUR ANSTEUERUNG VON PERSONENSCHUTZMITTEL**

DEVICE AND METHOD FOR ACTUATING PASSENGER PROTECTION MEANS

DISPOSITIF ET PROCÉDÉ POUR COMMANDER DES MOYENS DE PROTECTION DES PERSONNES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.09.2006   DE 102006044444**

(43) Veröffentlichungstag der Anmeldung:
**10.06.2009   Patentblatt 2009/24**

(73) Patentinhaber: **Robert Bosch GmbH**
**70442 Stuttgart (DE)**

(72) Erfinder:
• MACK, Frank
**Yongsan-ku, Seoul 140-894 (KR)**
• LANG, Gunther
**70569 Stuttgart (DE)**

(56) Entgegenhaltungen:
**DE-A1-102004 042 467      GB-A- 2 356 076
GB-A- 2 376 118**

EP 2 066 534 B1

**Beschreibung**

Stand der Technik

Die Erfindung betrifft eine Vorrichtung bzw. ein Verfahren zur Ansteuerung von Personenschutzmitteln nach der Gattung der unabhängigen Patentansprüche.

Aus DE 102 004 042 467 A1 ist bereits ein Verfahren und eine Vorrichtung zur Erzeugung eines Auslösesignals für eine Fußgängerschutzvorrichtung bekannt. Dabei wird eine Auslöseüberprüfung und eine Plausibilitätsprüfung der Sensordaten durchgeführt, wobei bei der Auslöseüberprüfung zur Erkennung eines Fußgängers mit den Sensordaten eine Merkmalsextraktion und/oder eine Offset-Erkennung ausgeführt werden, welche einen Auftreffpunkt des Objekts bestimmt, wobei das Auslösesignal für die Fußgängerschutzvorrichtung erzeugt wird, wenn bei der Auslöseüberprüfung eine Kollision mit einem Fußgänger erkannt wird und die Plausibilitätsprüfung der Sensordaten positiv ist.

Offenbarung der Erfindung

Die erfindungsgemäße Vorrichtung bzw. das erfindungsgemäße Verfahren zur Ansteuerung von Personenschutzmitteln mit den Merkmalen der unabhängigen Patentansprüche haben demgegenüber den Vorteil, dass durch die Bestimmung einer Frequenz eines vom Unfallsignal abgeleiteten Signals eine sehr genaue und robuste Unterscheidung zwischen einem Fußgängeraufprall und anderen Objekten möglich ist. Dies liegt daran, dass unterschiedliche Objekte eine unterschiedliche Steifigkeit aufweisen und daher zu einer unterschiedlichen Anregungsfrequenz führen. Erfindungsgemäß wird die Frequenz durch die Länge eines Signalverlaufs bestimmt, wobei auch der aufsummierte Signalverlauf, also der integrierte Signalverlauf, verwendet wird. Damit ist dann bei Anwendung bei einem Fußgängerschutzsystem ein besserer Fußgängerschutz möglich.

Vorliegend kann das zweite Signal das erste Signal sein, ein gefiltertes erstes Signal, ein gemitteltes erstes Signal oder ein integriertes bzw. aufsummiertes erstes Signal.

Wird die erfindungsgemäße Vorrichtung bzw. das erfindungsgemäße Verfahren bei anderen Aufprallarten wie zwischen Fahrzeugen verwendet, ist erfindungsgemäß eine bessere Unterscheidung zwischen einem Auslösefall und einem Nichtauslösefall möglich. Insbesondere können Misuse-Objekte durch die erfindungsgemäße Auswertung der Frequenz besser identifiziert werden. Damit wird ein höheres Schutzpotential erreicht und das Risiko von ungewollten Fehlauslösungen verringert.

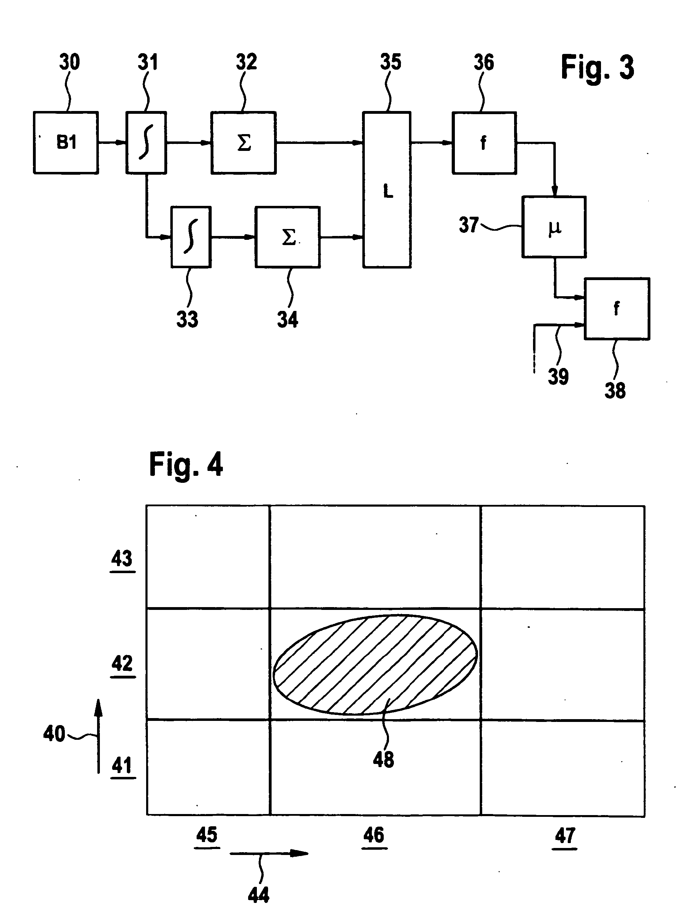

Bezüglich des Fußgängerschutzes ist zu beachten, dass sich Menschen von sehr vielen Objekten, für die keine Auslösung von Fußgängerschutzmitteln gewünscht ist, hauptsächlich durch ihre Masse und ihre Härte, also ihre Steifigkeit, unterscheiden. Figur 4 erläutert dies. Auf der Abszisse ist das Gewicht abgetragen und auf der Ordinate die Steifigkeit. Dabei werden jeweils drei Klassen definiert, wobei beim Gewicht die Unterscheidung leicht 45, mittel 46 und schwer 47 gemacht wird. Bei der Steifigkeit wird weich 41, mittel 42 und hart 43 unterschieden. Die Menschen bewegen sich im Feld 48, und zwar ausgehend vom sechsjährigen Kind bis zum Erwachsenen. Im unteren linken Feld ist beispielsweise ein Ball gegeben, darüber sind Katze, Vogel, Pfosten anzunehmen und im obersten Feld der Golfball. Bei dem mittleren Gewicht ist oberhalb des Feldes für die Menschen ein großer Stahlpfosten oder eine Mülltonne anzunehmen. Beim schweren Gewicht ist bei harter Steifigkeit eine Wand oder ein anderes Fahrzeug anzunehmen. Wird nun mittels der Frequenz der bei der Kollision auftretenden Schwingung die Steifigkeit des Aufprallobjekts klassifiziert, kann dieses Objekt identifiziert werden. Die Frequenz wird vorzugsweise von einem Beschleunigungssensor oder mehreren Beschleunigungssensoren oder von Klopfsensoren erfasst. Dabei ist die Eigenfrequenz der Schwingung in einem einfachen Federmodell proportional zur Wurzel der Federkonstanten. Harte Objekte führen also zu hochfrequenten Signalen, während weiche Objekte zu niederfrequenten Signalen führen.

Auslösecrashs unterscheiden sich von Nichtauslösecrash und Misuse-Objekten häufig in der Frequenzcharakteristik der Beschleunigungssignale. Die Frequenzcharakteristik der Beschleunigungssignale wird durch die Abfolge der Bruchvorgänge in der Knautschzone bestimmt. Nichtauslösecrashes weisen wegen der geringeren Crashgeschwindigkeit und den daher langsam ablaufenden Bruchvorgängen in der Regel niederfrequentere Beschleunigungssignale als Auslösecrashes auf. Auch Misuse-Objekte haben häufig Frequenzcharakteristiken, die sich deutlich von Crashsignalen unterscheiden. Sie können zum einen niederfrequenter, z. B. ein Kieshaufen, zum anderen aber auch höherfrequenter, z. B. Hammerschläge als Crashsignale sein. Ziel ist es, diese Frequenzunterschiede im Beschleunigungssignal zu erkennen. Für Frontcrashs am geeignetsten ist dafür der Beschleunigungssensor, der in Fahrzeuglängsrichtung Beschleunigung erfasst, beispielsweise in einem zentral angeordneten Airbagsteuergerät Es ist jedoch auch denkbar, die Frequenzen eines Querbeschleunigungssensors oder der sogenannten Upfrontsensoren auszuwerten. Die Upfrontsensoren sind in der Fahrzeugfront eingebaut. Die so erhaltene Frequenzinformation kann dann benutzt werden, um den weiterhin auf Basis von Beschleunigungssignalen und deren ersten und zweiten Integralen arbeitenden Hauptalgorithmus durch Anpassung der Auslöseschwellen zu beeinflussen. Der Eingriff in den Hauptalgorithmus kann prinzipiell in derselben Weise erfolgen, wie auch sonstige Zusatzalgorithmen, z. B. der Upfrontalgorithmus auf den Hauptalgorithmus einwirken.

Für Seitencrash wird die Frequenzanalyse am geeignetsten auf Basis der peripheren Querbeschleunigungssensoren durchgeführt. Die peripheren Beschleunigungssensoren sind in der Fahrzeugseite eingebaut. Die so erhaltene Information kann dazu benutzt werden, den Hauptalgorithmus durch Anpassung der Auslöseschwellen zu beeinflussen. Dazu wird grundlegend die erfindungsgemäße Methode zur Frequenzbestimmung verwendet.

Das beschriebene Verfahren besteht darin, eine Frequenzanalyse basierend auf der Messung der Länge des Signals sowie des integrierten Signals durchzuführen, wobei auch das Signal selbst durch eine Signalverarbeitung verändert sein kann.

Durch die in den abhängigen Ansprüchen aufgeführten Maßnahmen und Weiterbildungen sind vorteilhafte Verbesserungen der in den unabhängigen Patentansprüchen angegebenen Vorrichtung zur Ansteuerung von Personenschutzmitteln bzw. des in den unabhängigen Patentansprüchen angegebenen Verfahrens zur Ansteuerung von Personenschutzmitteln möglich.

Besonders vorteilhaft ist, dass die Länge des Signalverlaufs dadurch bestimmt wird, dass jeweils eine Differenz von aufeinanderfolgenden Werten des Signals und des aufsummierten Signals verwendet werden. Vorzugsweise können diese Differenzen absolut aufaddiert werden, um die Länge des Signals zu bestimmen. Die Länge des Signals oder Signalverlaufs ist ein Maß für die Bewegung im Signal. Entsprechend ist die Länge, beispielsweise des ersten Integrals, ein Maß für die Bewegung im ersten Integral. Hochfrequente Schwingungen zeichnen sich dadurch aus, dass sie relativ wenig Integral aufbauen, d. h. eine gegebene Bewegung führt zu relativ wenig Bewegung im Integral. Daher wird das Signal mit dem aufsummierten oder integrierten Signal verglichen. Mit dem Begriff aufsummiert ist demnach eine rechentechnische Möglichkeit der Integration gemeint. Daher bietet es sich an, das Verhältnis der Längen zu verwenden. Damit erhält man eine verbesserte Frequenzschätzung.

Vorzugsweise wird dafür der Quotient zwischen der Länge des Signals und der Länge des aufsummierten Signals genommen. Der Abstand der Werte eines Signals um die Differenzen zu bilden ist dabei durch die Taktung des Algorithmus bestimmt. Dabei ist dies unabhängig davon, ob die Schwingung mit einer positiven oder negativen Halbwelle beginnt. Das Vorzeichen wird nicht berücksichtigt.

Die Frequenzbestimmung kann dabei fortlaufend erfolgen, also mit dem Algorithmus Start oder in bestimmten Abständen neu beginnen.

Wird mehr als ein Unfallsensor verwendet, also beispielsweise mehr als ein Beschleunigungssensor oder ein Körperschall oder ein Klopfsensor, dann gewichtet die Auswerteschaltung, üblicherweise der Mikrocontroller, die Frequenzen, die für die einzelnen Unfallsensoren ermittelt werden und mittelt dann diese gewichteten Werte.

Die Gewichtung wird vorteilhafter Weise in Abhängigkeit von der Länge des aufsummierten zweiten Signals durchgeführt. Dabei wird die Gewichtung gemäß der Länge des ersten Integrals des Signals oder des aufsummierten Signals durchgeführt. Dies bedeutet, dass der Sensor mit der größten Länge des ersten Integrals am stärksten gewichtet wird. Damit ist sichergestellt, dass der bei einem Fußgängeraufprall nächstliegende Sensor, der typischerweise das stärkste Signal sieht, auch entsprechend stärker als die anderen Sensoren in die Frequenzschätzung eingeht.

Wie oben angegeben, kann die Unfallsensorik als Beschleunigungssensorik ausgeführt sein, wobei auch andere Sensoren zusätzlich vorhanden sein können. Neben Beschleunigungssensoren können dabei auch Drehratensensoren, Klopfsensoren oder Körperschallsensoren verwendet werden.

Ausführungsbeispiele der Erfindung sind in der Zeichnung dargestellt und werden in der nachfolgenden Beschreibung näher erläutert.

Es zeigen:

Figur 1          ein Blockschaltbild der erfindungsgemäßen Vorrichtung,

Figur 2a und 2b    jeweils ein Signalablaufdiagramm zur Erläuterung des erfindungsgemäßen Verfahrens,

Figur 3          ein weiteres Signalablaufdiagramm,

Figur 4          ein Steifigkeitsgewichtsdiagramm,

Figur 5          ein Signalverlauf für eine sinusförmige Beschleunigung mit Kreisfrequenzen von 600 bzw. 300 Hz,

Figur 6          ein entsprechendes Diagramm für das Integral dieser sinusförmigen Beschleunigung,

Figur 7          das entsprechende zweite Integral für diese sinusförmige Beschleunigung,

Figur 8          ein Beschleunigungssignal und die entsprechende Länge des Beschleunigungssignals,

| Figur 9 | die schematische Darstellung einer Schwingung, deren zweite Halbwelle hochfrequenter als die erste Halbwelle ist, |
| Figur 10 | ein Ergebnis der Frequenzschätzung für Sinuskurven mit verschiedenen Frequenzen, |
| Figur 11 | ein Ergebnis der Frequenzschätzung für Fahrzeugcrashes und |
| Figur 12 | Beschleunigungssignale für lower leg und Stahlpfosten vergleichbarer Masse und die Fahrzeuggeschwindigkeit bzw. die Frequenzanalyse gemäß des erfindungsgemäßen Verfahrens. |

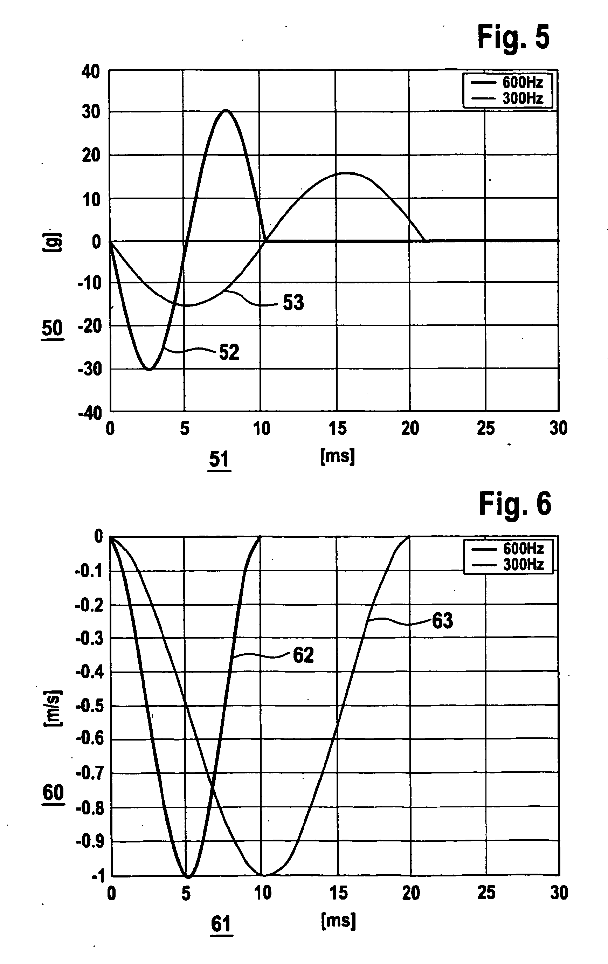

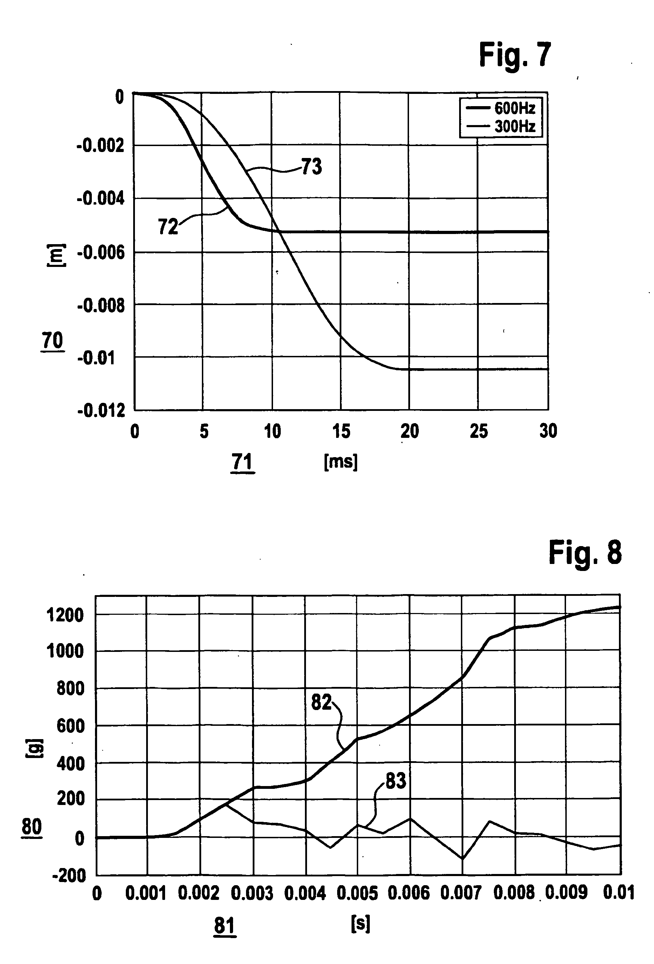

Um Kollisionsobjekte zu identifizieren, ist die Frequenzanalyse sowohl für den Fußgängerschutz, also auch für andere Kollisionsarten von großem Vorteil. Dabei ist es möglich, die Frequenz über die Minima des Beschleunigungssignals und des ersten Integrals bzw. auch des zweiten Integrals zu bestimmen. Dies ergibt sich beispielsweise aus Figur 5. Figur 5 zeigt auf der Abszisse 51 die Zeit und auf der Ordinate 50 die Beschleunigung. Zwei Signale 52 und 53 sind im Zeitverlauf dargestellt Das Signal 52 hat eine Kreisfrequenz von 600 Hz, wobei das Signal 53 eine Kreisfrequenz von 300 Hz aufweist Figur 6 zeigt dazu die Integrale. Dabei ist das Signal 62 das Signal mit der Kreisfrequenz 600 Hz und das Signal 63 das Signal mit der Kreisfrequenz 300 Hz. Gemäß Figur 7 ist das Signal 72 das Signal mit der Kreisfrequenz 600 Hz und das Signal 73 das Signal mit der Kreisfrequenz 300 Hz. Die Frequenz kann damit dann auf zwei Arten rekonstruiert werden:

1. Die Frequenz kann aus dem Minimum der Beschleunigung und dem Minimum des ersten Integrals der Beschleunigung berechnet werden. Die Frequenz ergibt sich dann durch eine Division.

$$\omega = 2\frac{\overline{a}}{\overline{dv}} \qquad (1)$$

2. Die Frequenz kann aus dem Minimum des ersten Integrals und dem Minimum des zweiten Integrals berechnet werden. Auch hier kann dann eine Division angewendet werden.

$$\omega = \pi\frac{\overline{dv}}{\overline{ds}} \qquad (2)$$

Dieses Verfahren hat bezüglich folgender Punkte Verbesserungspotential:

A. Falls das Signal nicht wie oben beschrieben nach einer Periode endet, sondern die Schwingung länger aufrechterhalten wird, werden keine neuen Maxima von der Beschleunigung und dem ersten Integral erreicht. Die erste Berechnungsvorschrift liefert also weiterhin eine korrekte Frequenzschätzung. Dagegen nimmt das zweite Integral weiterhin kontinuierlich ab und erreicht neue Minimalwerte - die zweite Berechnungsvorschrift ist daher nicht mehr gültig und es werden zunehmend zu niedrige Frequenzen abgeschätzt.
B. Es wird nur die erste Halbwelle, bzw. die erste volle Periode erfasst. Der weitere Verlauf in einem realen, in der Regel nicht harmonischen Signal wird nur dann erfasst, wenn damit neue Minima vom Signal oder dem ersten und zweiten Integral einhergehen. Ist das nicht der Fall, ändert sich die Frequenzschätzung nicht mehr, auch wenn das Signal selbst seine Frequenz ändern sollte. Ein solches Beispiel ist in Figur 8 zu sehen. Dort ist ein Diagramm gezeigt, auf der Abszisse 81 ist die Zeit angegeben, und auf der Ordinate 80 die Beschleunigung. Das Signal 83 kennzeichnet die Beschleunigung. Das Signal 82 die Länge des Beschleunigungssignals. Auch die Unterscheidung, ob mit Minima oder Maxima gerechnet werden muss, kann beispielsweise einen kontinuierlichen Übergang von Stoßgängerbereichen mit einer negativen Beschleunigung und einer positiven Beschleunigung nicht dargestellt werden.

Daher wird erfindungsgemäß vorgeschlagen, nicht die Minima des Signals des ersten und/oder zweiten Integrals zu betrachten, sondern die Länge des Signals bzw. Signalverlaufs. Dabei kann vorzugsweise die Differenz von aufeinanderfolgenden Werten absolut aufsummiert werden.

Dies ist in Figur 8 durch die Kurve 82 dargestellt. Die Länge des Signals des ersten Integrals und des zweiten Integrals werden folgendermaßen bezeichnet:

$$\text{length (a)} = \sum_i |a_i - a_{i-1}| \qquad (3a)$$

$$\text{length (dv)} = \sum |dv_i - dv_{i-1}| = \sum_i |a_i| \qquad (3b)$$

$$\text{length (ds)} = \sum_i |ds_i - ds_{i-1}| = \sum_i |v_i| \qquad (3c)$$

Im Folgenden wird die Erfindung anhand der Beschleunigungssignale weiterhin erklärt. Es ist jedoch möglich, auch andere Unfallsignale zu verwenden.

In (3b) wurde ausgenutzt, dass die Differenz zweier aufeinanderfolgender Integratorwerte gerade der diesem Zyklus zugeordnete Beschleunigungswert ist. Entsprechend gilt in (3c), dass die Differenz zweier aufeinanderfolgender Werte des 2. Integrals gerade der Wert des ersten Integrals in diesem Zyklus ist.

In Fig. 8 ist die Länge des Beschleunigungssignals dargestellt. Man sieht, dass bis zum ersten Signalmaximum die Länge des Signals dem Signal selbst folgt Der anschließende Rückschwinger wird dagegen in der Länge ohne Vorzeichen berücksichtigt und führt zu einem weiteren Anstieg. Die Länge des Signals ist damit ein Maß für die "Bewegung im Signal". Entsprechend ist die Länge des ersten Integrals ein Maß für die "Bewegung im ersten Integral", hochfrequente Schwingungen zeichnen sich nun dadurch aus, dass sie relativ wenig Integral aufbauen, d. h. eine gegebene "Bewegung im Signal" führt zu relativ wenig "Bewegung im Integral".

Anstatt des Amplitudenverhältnisses (1) bietet es sich daher an, das Verhältnis der Längen zu verwenden. Man erhält somit als verbesserte Frequenzschätzung

$$\omega = \frac{length(a)}{length(dv)} = \frac{\sum_i |a_i - a_{i-1}|}{\sum_i |v_i - v_{i-1}|} = \frac{\sum_i |a_i - a_{i-1}|}{\sum_i |a_i|} \qquad (4)$$

Dabei läuft der Index i über alle Rechenzyklen ab Algorithmusstart. Damit ergibt sich die Frequenz also als Quotient von Länge des Beschleunigungssignals und Absolutintegral des Beschleunigungssignals.

Wie leicht zu erkennen ist, ist Formel (4) unabhängig davon, ob die Schwingung mit einer positiven oder negativen Halbwelle beginnt (Vorzeichen von a)

Ebenso ist leicht nachzuvollziehen, dass während der ersten Halbwelle der oben angegebenen Sinusschwingung O< t < π/ω gerade gilt

$$\text{length(a)} = 2\bar{a} \text{ und length(v)} = \bar{v}$$

und damit das Ergebnis aus (1) reproduziert wird. Der Querstrich steht hierbei für das erreichte Minimum von a bzw. v.

Während die zweite Halbwelle π/ω< t < 2π/ω nicht mehr zu (1) beiträgt, da die Minima von Signal und Integral während der ersten Halbwelle erzielt wurden und in der zweiten Halbwelle nur noch die Rückintegration auf v=0 erfolgt, trägt die zweite Halbwelle sehr wohl zu (4) bei. Bleibt die Schwingung harmonisch, gilt am Ende der gesamten Periode

$$length(a) = 4\bar{a} \quad \text{und} \quad length(v) = 2\bar{v}$$

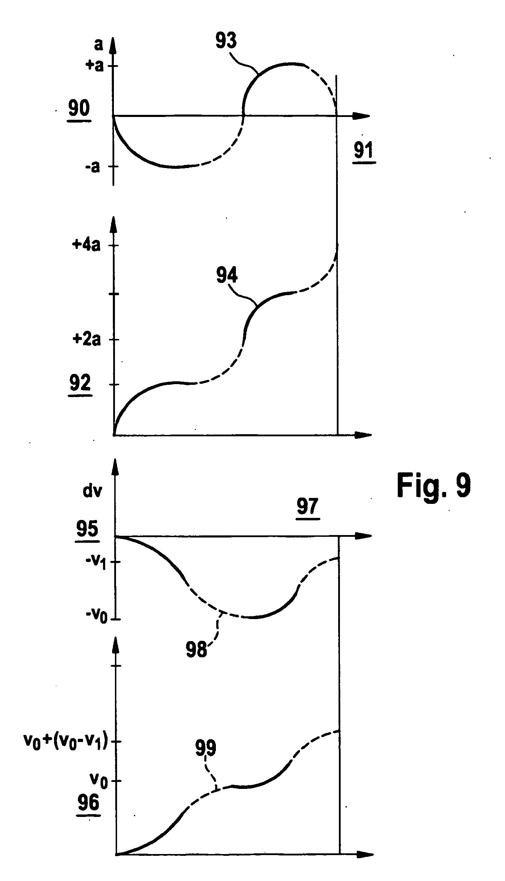

d. h. das Verhältnis und damit die ermittelte Frequenz ändert sich nicht. Falls die Schwingung aber in der zweiten Halbwelle seine Frequenz ändern sollte, wird dies mit der Methode (4) im Gegensatz zur Methode (1) erfasst und führt zu einer entsprechend korrigierten Frequenzschätzung. Dies ist in Fig. 9 illustriert. In diesem Beispiel hat die zweite Halbwelle des Signals dieselbe Amplitude wie die erste Halbwelle, aber eine höhere Frequenz. Dies geht aber nicht in die Länge des Signals ein, und am Ende der Periode gilt length(a) = 4a0. Die höhere Frequenz der zweiten Halbwelle führt aber dazu, dass der Integrator nicht bis auf Null zurückgeführt wird, sondern bei einem negativen Wert -v1 stehen bleibt. Die zweite Halbwelle hat also eine Integratoränderung von v0-v1 zur Folge. Die Länge des Integrals ist damit length(v) = 2v0-v1 < 2v0 und damit kleiner als bei harmonischer Fortsetzung der Schwingung. Der Quotient (4) liefert also eine höhere Frequenzschätzung als der Quotient (1).

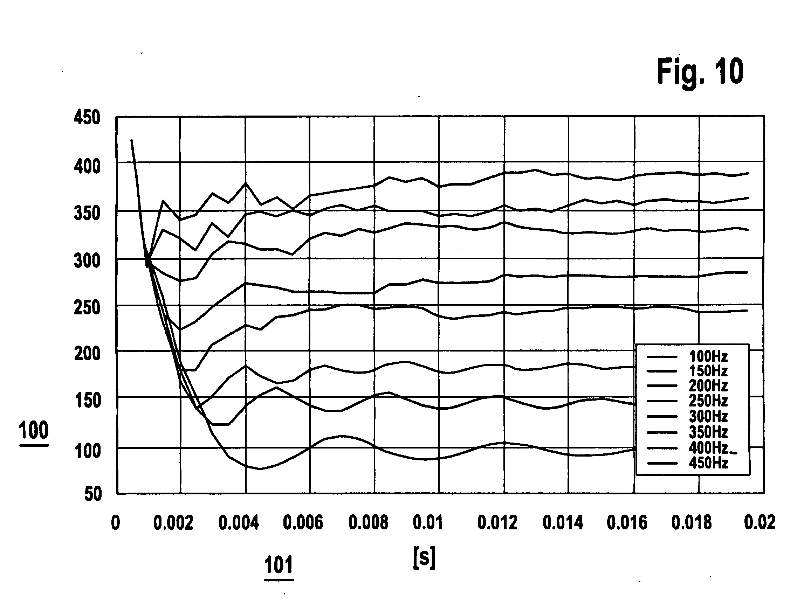

In Fig. 10 ist das Ergebnis der Frequenzschätzung (4) für harmonische Schweingungen mit Frequenzen von 100-450 Hz dargestellt. Die hier auftretenden Abweichungen der ermittelten von den exakten Frequenzen finden ihre Ursache in der Signalverarbeitung; in diesem Beispiel wird der Sensor mit 4.4 kHz abgetastet, der Auswertealgorithmus läuft dazu asynchron im 2 kHz-Raster. Bei einer entsprechend hohen, synchronen Signalabtastung und -verarbeitung würde Gleichung (4) die exakten Frequenzen reproduzieren.

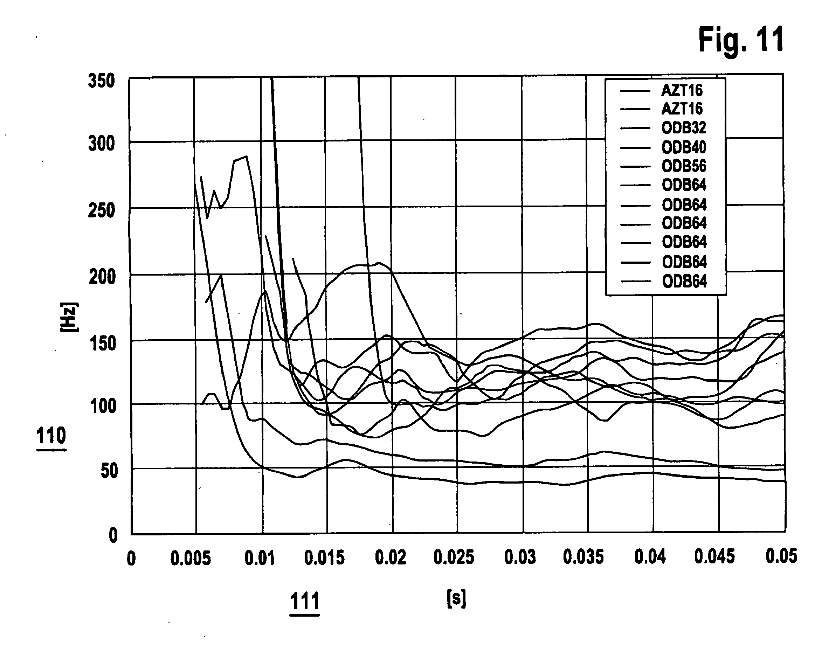

In Fig. 11 ist für eine gegebene Fahrzeugplattform die Frequenzanalyse für Fahrzeugcrashs der konkurrierenden Typen AZT 16 km/h (Nichtauslöse-Reparaturcrash) gegenüber Crashs mit 40% Offset gegen eine deformierbare Barriere (ODB mit 32, 40 und 64 km/h) auf Basis des Zentralgeräte-x-Sensors dargestellt. Die Trennbarkeit der verschiedenen Crashtypen über ihren Frequenzgehalt ist gegeben.

Mit derselben Methode kann die Formel (2) ersetzt werden durch

$$\Omega = \frac{\pi \, length(dv)}{2 \, length(ds)} = \frac{\pi \sum_i |v_i - v_{i-1}|}{2 \sum_i |s_i - s_{i-1}|} = \frac{\pi \sum_i |a_i|}{2 \cdot \sum_i |v_i|} \qquad (5) \quad .$$

Damit ergibt sich die Frequenz also als Quotient von Absolutintegral des Beschleunigungssignals und Absolutintegral des ersten Integrals.

Im Unterschied zu Formel (2) liefert diese Frequenzschätzung auch dann noch korrekte Ergebnisse, wenn die Schwingung nicht nach einer Periode ändert, sondern weiterhin aufrechterhalten wird. Dann steigt zwar das zweite Integral und dessen Länge weiterhin an, aber dies wird gerade durch das weitere Anwachsen der Länge des ersten Integrals im Zähler kompensiert - das Verhältnis und damit die Frequenz bleibt konstant.

Beide Methoden (4) und (5) stellen jeweils ein Verhältnis zweier Größen dar. Im Steuergerätcode bietet es sich nun an, eine Schwellwertabfrage der so ermittelten Frequenz, z. B.

$$\text{Omega} = \text{nominator/denominator} < \text{Schwellwert}$$

In der Form

$$\text{Nominator} < \text{denominator} * \text{Schwellwert} \qquad (6)$$

Auszudrücken. Damit wird die rechenzeitintensive Division umgangen.

Für die Anwendung im Bereich Fußgängerschutz werden typischerweise zwei oder drei Beschleunigungssensoren eingesetzt. Hier stellt sich die Problematik, wie die Frequenzen der einzelnen Sensorsignale unter Berücksichtigung ihrer Signalstärke miteinander kombiniert werden sollen. Nach Möglichkeit soll dabei die Division für die Einzelfrequenzen in (4) und (5) vermieden werden.

Diese Anforderungen werden folgendermaßen erfüllt. Die Frequenzschätzung (4) angewendet auf in diesem Beispiel drei unabhängige Sensoren (links, Mitte, rechts) ergibt zunächst die drei Einzelfrequenzen

$$\omega_L = \frac{length(a_L)}{length(dv_L)}, \ \omega_R = \frac{length(a_R)}{length(dv_R)} \ und \ \omega_M = \frac{length(a_M)}{length(dv_M)}\ .$$

Eine gewichtete Mittelung dieser drei Einzelfrequenzen ist nun so durchzuführen, dass die einzelnen Sensorsignale gemäß der Länge des ersten Integrals gewichtet werden. Die bedeutet, dass der Sensor mit der größten Länge des ersten Integrals am stärksten gewichtet wird. Damit ist sichergestellt, dass der bei einem Fußgängeraufprall nächstliegende Sensor, der typischerweise das stärkste Signal sieht, auch entsprechende stärker als die anderen Sensoren in die Frequenzschätzung eingeht. Mit den Gewichtsfaktoren $f_i = \frac{length(dv_i)}{\sum_j length(dv_j)}$, wobei die Indices i und j hier für die einzelnen Sensoren stehen, ergibt sich als Gesamtfrequenz

$$\omega = \sum_i f_i \cdot \omega_i = \sum_i \frac{length(dv_i)}{\sum_j length(dv_j)} \frac{length(a_i)}{length(dv_i)} = \frac{\sum_i length(a_i)}{\sum_i length(v_i)}\ . \qquad (7)$$

Im Zähler wird also die Länge der Beschleunigungssignale über alle Sensoren aufsummiert, im Nenner wird die Länge der ersten Integrale (die nach (3b) ja identisch zum Absolutintegral der Beschleunigung sind) über alle Sensoren aufsummiert. Da (7) wiederum ein einfacher Quotient ist, kann eine Schwellwertabfrage wieder in der Form (6) unter Vermeidung einer Division dargestellt werden.

Ähnlich ergibt die Frequenzschätzung (5) für die drei Einzelsensoren die Ergebnisse

$$\Omega_L = \frac{\pi length(dv_L)}{2 length(ds_L)}, \ \Omega_R = \frac{\pi length(dv_R)}{2 length(ds_R)} \ und \ \Omega = \frac{\pi length(dv_M)}{2 length(ds_M)}\ .$$

Eine gewichtete Mitteilung wird hier vorteilhafter Weise so durchgeführt, dass die einzelnen Sensoren gemäß der Länge ihres zweiten Integrals gewichtet werden. Mit den Gewichtsfaktoren $g_i = \frac{length(ds_i)}{\sum_j length(ds_j)}$ ergibt sich dann als Gesamtfrequenz

$$\Omega = \sum_i g_i \Omega_i = \frac{\pi}{2} \sum_i \frac{length(ds_i)}{\sum_j length(ds_j)} \frac{length(dv_i)}{length(ds_i)} = \frac{\pi}{2} \frac{\sum_i length(dv_i)}{\sum_i length(ds_i)}\ . \qquad (8)$$

Auch mit diesem Ergebnis kann eine Schwellwertabfrage in der Form (6) dargestellt werden.

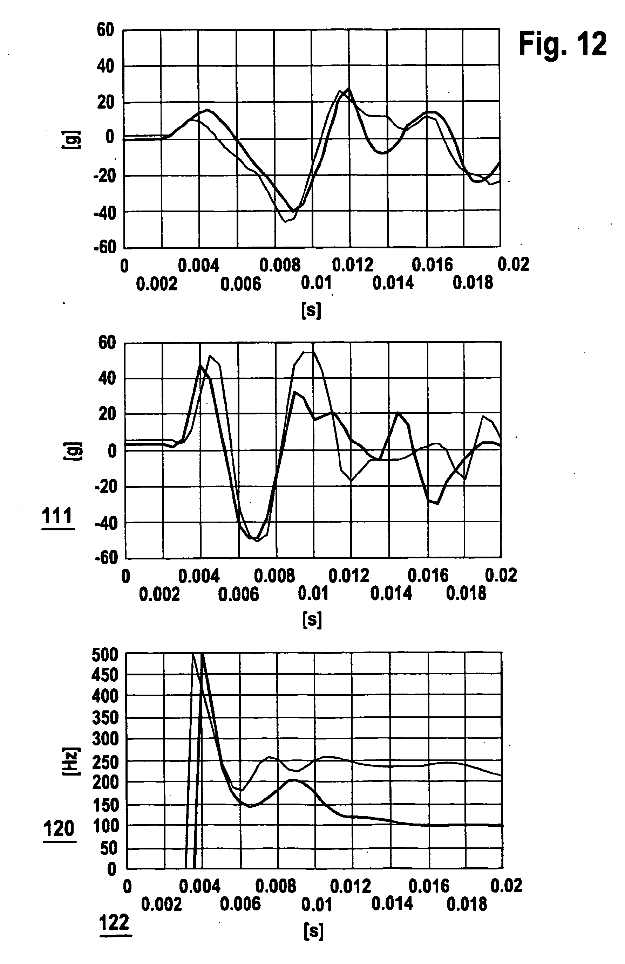

In Fig. 12 sind die Signale eines Fußgängerbeins (Lower Leg Impactor 13.4 kg) und eines Stahlpfostens vergleichbarer Masse (12.2 kg) bei einem mittigen Aufprall auf einen Fahrzeugstoßfänger bei einer Fahrzeuggeschwindigkeit von 20 km/h dargestellt. Die kombinierte Frequenzanalyse beider Sensoren auf Basis von (8) erlaubt hier eine sichere Trennung dieser Objekte ab der 10. ms.

Für die Anwendung im Bereich Fußgängerschutz ist es am geeignetsten, die auf den Formeln (4), (5), (7) oder (8) beruhende Schwellwertabfrage (6) mit einem Schwellwert durchzuführen, der in Abhängigkeit von der CAN-Geschwindigkeit und/oder des erkannten Auftreffpunktes und/oder der aktuellen Umgebungstemperatur gewählt werden kann.

Der Vergleich der Form (6) kann in einem bestimmten Zeitfenster mit einer konstanten oder einer zeitabhängigen Schwelle erfolgen.

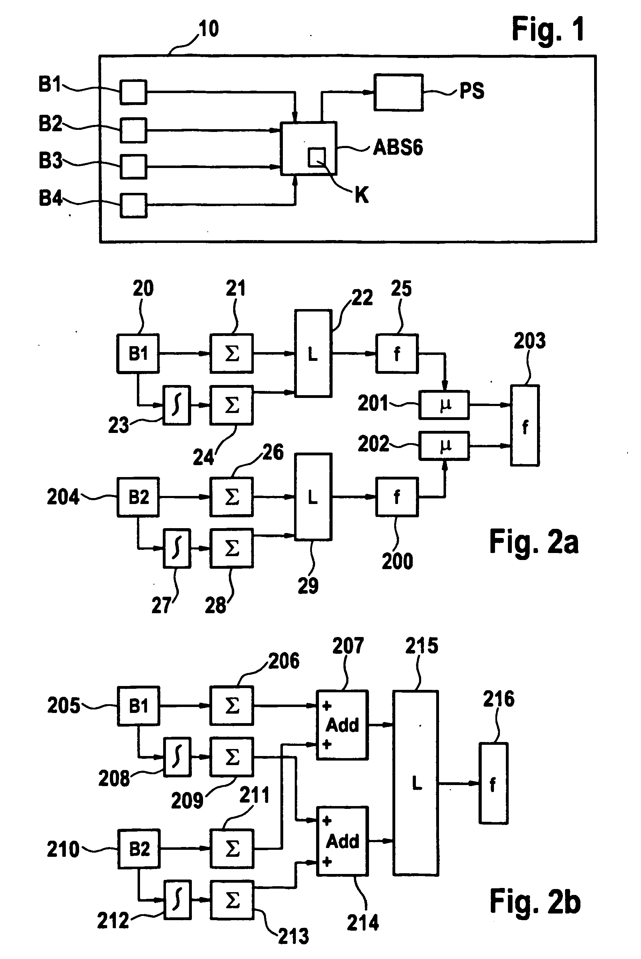

Figur 1 zeigt ein Blockschaltbild der erfindungsgemäßen Vorrichtung. In einem Fahrzeug 10 sind an der Fahrzeugfront beispielhaft vier Beschleunigungssensoren B1 bis B4 angeordnet. Anstatt von vier Beschleunigungssensoren können auch nur zwei oder drei oder auch nur ein einziger verwendet werden. Die Beschleunigungssensoren B1 bis B4 erzeugen beispielsweise eines mikromechanischen Elements anhand einer Beschleunigung eine Kapazitätsänderung, die verstärkt und digitalisiert wird, um dann an ein Steuergerät ABSG übertragen zu werden. Dieses Steuergerät ABSG ist im Fahrzeug zentral angeordnet, es kann jedoch auch an anderen Stellen angeordnet sein. Das Steuergerät ABSG steuert die gesamten Personenschutzmittel des Fahrzeugs, d. h. Fußgängerschutz und Insassenschutz. Der innere Aufbau des Steuergeräts ABSG ist der Einfachheit halber nicht dargestellt. Lediglich ist dargestellt, dass ein Körperschallsensor K im Airbagsteuergerät ABSG angeordnet sein kann. Die Auswerteschaltung, beispielsweise als Mikrocontroller ist im Airbagsteuergerät ABSG als auch Schnittstellenbausteine und weitere Sensoren Ansteuerungsschaltungen für die Personenschutzmittel PS.

In Abhängigkeit von den Signalen der Beschleunigungssensoren B1 bis B4 führt das Airbagsteuergerät ABSG die oben dargestellte Frequenzanalyse durch. Anhand dessen kann ein Aufprallobjekt identifiziert werden, um damit zu entscheiden, ob Personenschutzmittel PS angesteuert werden sollen oder nicht. Bei den Personenschutzmitteln PS handelt es sich um Innenairbags, Gurtstraffer und auch Fußgängerschutzmittel wie eine anhebbare Fronthaube und/oder Außenairbags.

Figur 2a erläutert in einem ersten Signalablaufdiagramm das erfindungsgemäße Verfahren. Beispielhaft werden jedoch hier nur zwei Beschleunigungssensoren B1 und B2 betrachtet. Die Beschleunigungssensoren B1 und B2 liefern jeweils in den Blöcken 20 und 204 ihr Signal. Das Signal des Beschleunigungssensors B1 wird dann im Block 21 bezüglich aufeinanderfolgender Werte und deren Differenzen absolut aufaddiert. Parallel dazu wird das Beschleunigungssignal des Sensors B1 im Block 23 integriert, d. h. es kann auch eine gewichtete Mittelung oder andere äquivalente Arten der Integration durchgeführt werden. Auch hier werden im Block 24 die Differenzen von aufeinanderfolgenden Werten absolut aufaddiert. Im Block 22 werden dann mittels dieser Signallängen eine Quotientenbildung durchgeführt, um die Frequenz im Block 25 zu bestimmen. Aus den Werten des ersten Integrals kann, wie oben dargestellt, im Block 201 eine Gewichtung für die Frequenz aus dem Block 24 ermittelt werden. Es ist jedoch möglich, dass auch andere Gewichtungen, die fest voreingestellt oder adaptiv ausgeführt sind, vorgenommen werden. Diese gewichtete Frequenz geht in Block 203 ein, der eine Mittelwertbildung durchführt Das Ergebnis ist dann die Frequenz.

In der unteren Hälfte des Signalpfads läuft dies für das Signal B2 parallel ebenso ab. Aufeinanderfolgende Werte werden voneinander abgezogen und die Differenzen im Block 26 absolut aufaddiert. Das Signal des Beschleunigungssensors B2 wird im Block 27 integriert, und auch hier werden dann die Differenzen von aufeinanderfolgenden Werten im Block 28 aufaddiert. Daraus wird im Block 29 ein Quotient gebildet, um im Block 200 daraus die Frequenz zu bestimmen. Ebenfalls wird im Block 29 beispielhaft die Gewichtung aus den Werten des ersten Integrals gebildet wie oben dargestellt, um diese im Block 202 bereitzustellen. Auch hier ist jede andere Gewichtung möglich, um die Signale der einzelnen Sensoren bei der Mittelung für die Frequenzbestimmung entsprechend zu verstärken oder abzuschwächen. Die Gewichtung und aus der Frequenz führen dann zur gewichteten Frequenz, die ebenfalls in die Mittelwertbildung 203 eingeht Daraus wird dann der gewichtete Mittelwert ermittelt. Liegt nur ein Sensor vor, dann ist beispielsweise im Block 25 das erfindungsgemäße Verfahren bereits beendet. Eine Gewichtung und Mittelwertbildung ist sodann nicht mehr notwendig. Liegen entsprechend mehr Signale von mehr Sensoren vor, dann wiederholen sich diese Signalpfade.

Fig. 2b erläutert ein alternativen Signalablauf. In Block 205 wird das Beschleunigungssignal des Sensors B1 bereitgestellt. Dieses Signal kann beispielsweise bereits tiefpassgefiltert sein. Dieses Signal wird im Block 206 bezüglich aufeinanderfolgender Werte und deren Differenzen absolut aufaddiert. Parallel dazu wird das Signal im Block 208 integriert und dann im Block 209 bezüglich aufeinanderfolgender Werte und deren Differenzen absolut aufaddiert. In Block 207 werden die Summen der wie oben beschriebenen absolut aufaddieren Beschleunigungen zusammengezählt und in Block 214 die Summen der wie oben beschriebenen absolut aufaddierten integrierten Beschleunigungen. Damit ist es dann gemäß Gleichung (7) möglich, einen Quotienten aus diesen beiden Summen im Block 215 zu bilden, um daraus in Block 216 die Frequenz zu bestimmen. Damit ist eine Einzelquotientenbildung und eine Mittelung nicht mehr notwendig.

Figur 3 erläutert eine Alternative zum erfindungsgemäßen Verfahren. Im Block 30 liegt das Signal des Beschleunigungssensors B1 vor. Dies wird im Block 31 integriert. Im Block 32 werden dann die Differenzen von aufeinanderfolgenden Werten absolut aufaddiert, wobei parallel dazu im Block 33 das integrierte Beschleunigungssignal noch einmal integriert wird. Auch hier werden dann aufeinanderfolgende Werte bezüglich ihrer Differenzen ausgewertet und diese Differenzen im Block 34 absolut aufaddiert. Aus den aufaddierten Differenzen der Blöcke 32 und 34 und dem Block 35 die Länge bestimmt und durch Quotientenbildung im Block 36 die Frequenz. Ebenso wird die Gewichtung entweder aus den vorliegenden Parametern oder fest eingestellten Werten in Block 37 bereitgestellt. Daraus wird dann im Block 38 die gewichtete Frequenz bestimmt. Für entsprechende weitere Sensoren wiederholt sich dann über die Signale 39 dieser Signalablauf.

**Patentansprüche**

1. Vorrichtung zur Ansteuerung von Personenschutzmitteln (PS), wobei die Vorrichtung mit einer Unfallsensorik (B1 bis B4), die ein erstes Signal erzeugt, verbindbar ist, **dadurch gekennzeichnet, dass** eine Auswerteschaltung derart konfiguriert ist, dass die Auswerteschaltung die Personenschutzmittel (PS) in Abhängigkeit von einer Frequenz (f) eines zweiten Signals, das vom ersten Signal abgeleitet wird, ansteuert, wobei die Auswerteschaltung die Frequenz (f) in Abhängigkeit von einer ersten Länge eines ersten Signalverlaufs des zweiten Signals und einer zweiten Länge eines zweiten Signalverlaufs des aufsummierten zweiten Signals bestimmt

2. Vorrichtung nach Anspruch 1, **dadurch gekennzeichnet, dass** die Auswerteschaltung derart konfiguriert ist, dass die Auswerteschaltung derart konfiguriert ist, dass die Auswerteschaltung die erste und zweite Länge in Abhängigkeit einer absoluten Aufsummierung von jeweiligen Differenzen von aufeinanderfolgenden Werten des ersten und des zweiten aufsummierten Signals bestimmt.

3. Vorrichtung nach Anspruch 1 oder 2, **dadurch gekennzeichnet, dass** die Auswerteschaltung die Frequenz (f) durch eine Quotientenbildung der ersten und zweiten Länge bestimmt.

4. Vorrichtung nach einem der Ansprüche 1 bis 3, **dadurch gekennzeichnet, dass** die Auswerteschaltung die Frequenzen fortlaufend bestimmt

5. Vorrichtung nach einem der vorhergehenden Ansprüche, **dadurch gekennzeichnet, dass** die Unfallsensorik (B1 bis B4) mehr als einen Unfallsensor (B1 bis B4) aufweist und dass die Auswerteschaltung die Frequenzen der zweiten Signale der jeweiligen Unfallsensoren gewichtet und mittelt.

6. Vorrichtung nach Anspruch 5, **dadurch gekennzeichnet, dass** die Auswerteschaltung die Gewichtung in Abhängigkeit der Längen der aufsummierten zweiten Signale durchführt.

7. Vorrichtung nach einem der vorhergehenden Ansprüche, **dadurch gekennzeichnet, dass** die Unfallsensorik (B1 bis B4) eine Inertialsensorik, vorzugsweise eine Beschleunigungssensorik, aufweist

8. Vorrichtung nach einem der vorhergehenden Ansprüche 1 bis 6, **dadurch gekennzeichnet, dass** die Unfallsensorik eine Klopfsensorik aufweist.

9. Verfahren zur Ansteuerung von Personenschutzmitteln (PS), wobei eine Unfallsensorik (B1 bis B4) ein erstes Signal erzeugt, **dadurch gekennzeichnet, dass** die Personenschutzmittel (PS) in Abhängigkeit von einer Frequenz (f) eines zweiten Signals, das vom ersten Signal abgeleitet wird, angesteuert wird, wobei die Frequenz in Abhängigkeit von einer ersten Länge eines ersten Signalverlaufs des zweiten Signals und der zweiten Länge eines zweiten Signalverlaufs eines aufsummierten zweiten Signals bestimmt wird.

10. Verfahren nach Anspruch 9, **dadurch gekennzeichnet, dass** die erste und die zweite Länge in Abhängigkeit von einer Aufsummierung von jeweiligen Differenzen von aufeinanderfolgenden Werten des ersten und des zweiten aufsummierten Signals bestimmt werden.

11. Verfahren nach Anspruch 9 oder 10, **dadurch gekennzeichnet, dass** die Frequenz (f) durch eine Quotientenbildung der ersten und zweiten Länge bestimmt wird.

12. Verfahren nach einem der Ansprüche 9 bis 11, **dadurch gekennzeichnet, dass** die Frequenz (f) fortlaufend bestimmt wird.

13. Verfahren nach einem der Ansprüche 9 bis 12, **dadurch gekennzeichnet, dass** bei einer Mehrzahl von Unfallsensoren die Frequenzen der zweiten Signale der jeweiligen Unfallsensoren gewichtet und gemittelt werden.

14. Verfahren nach Anspruch 13, **dadurch gekennzeichnet, dass** die Gewichtung in Abhängigkeit der Längen der aufsummierten zweiten Signale durchgeführt wird.

**Claims**

1. Device for actuating vehicle occupant protection means (PS), wherein the device can be connected to an accident sensor system (B1 to B4) which generates a first signal, **characterized in that** an evaluation circuit is configured in such a way that the evaluation circuit actuates the vehicle occupant protection means (PS) as a function of a frequency (f) of a second signal which is derived from the first signal, wherein the evaluation circuit determines the frequency (f) as a function of a first length of a first signal profile of the second signal and a second length of a second signal profile of the summed second signal.

2. Device according to Claim 1, **characterized in that** the evaluation circuit is configured in such a way that the evaluation circuit determines the first and second lengths as a function of absolute summing of respective differences between successive values of the first and second summed signals.

3. Device according to Claim 1 or 2, **characterized in that** the evaluation circuit determines the frequency (f) by forming quotients of the first and second lengths.

4. Device according to one of Claims 1 to 3, **characterized in that** the evaluation circuit continuously determines the frequencies.

5. Device according to one of the preceding claims, **characterized in that** the accident sensor system (B1 to B4) has more than one accident sensor (B1 to B4), and **in that** the evaluation circuit weights and averages the frequencies of the second signals of the respective accident sensors.

6. Device according to Claim 5, **characterized in that** the evaluation circuit carries out the weighting as a function of the lengths of the summed second signals.

7. Device according to one of the preceding claims, **characterized in that** the accident sensor system (B1 to B4) has an inertial sensor system, preferably an acceleration sensor system.

8. Device according to one of the preceding Claims 1 to 6, **characterized in that** the accident sensor system has a knocking sensor system.

9. Method for actuating vehicle occupant protection means (PS), wherein an accident sensor system (B1 to B4) generates a first signal, **characterized in that** the vehicle occupant protection means (PS) is actuated as a function of a frequency (f) of a second signal which is derived from the first signal, wherein the frequency is determined as a function of a first length of a first signal profile of the second signal and the second length of a second signal profile of a summed second signal.

10. Method according to Claim 9, **characterized in that** the first and second lengths are determined as a function of summing of respective differences of successive values between the first and second summed signals.

11. Method according to Claim 9 or 10, **characterized in that** the frequency (f) is determined by forming quotients of the first and second lengths.

12. Method according to one of Claims 9 to 11, **characterized in that** the frequency (f) is determined continuously.

13. Method according to one of Claims 9 to 12, **characterized in that** when there is a plurality of accident sensors the frequencies of the second signals of the respective accident sensors are weighted and averaged.

14. Method according to Claim 13, **characterized in that** the weighting is carried out as a function of the lengths of the summed second signals.

**Revendications**

1. Dispositif de commande de moyens (PS) de protection des personnes, le dispositif pouvant être relié à un ensemble de détecteurs d'accident (B1 à B4) qui forme un premier signal,
   **caractérisé en ce que**

un circuit d'évaluation est configuré de telle sorte que le circuit d'évaluation déclenche les moyens (PS) de protection des personnes en fonction de la fréquence (f) d'un deuxième signal dérivé du premier signal et
**en ce que** le circuit d'évaluation définit la fréquence (f) en fonction d'une première longueur d'une première évolution du deuxième signal et d'une deuxième longueur d'une deuxième évolution du deuxième signal cumulé.

2. Dispositif selon la revendication 1, **caractérisé en ce que** le circuit d'évaluation est configuré de telle sorte que le circuit d'évaluation définit la première et la deuxième longueur en fonction de la somme des valeurs absolues des différences des valeurs successives du premier signal et du deuxième signal cumulé.

3. Dispositif selon les revendications 1 ou 2,
**caractérisé en ce que** le circuit d'évaluation définit la fréquence (f) en formant le quotient de la première et de la deuxième longueur.

4. Dispositif selon l'une des revendications 1 à 3, **caractérisé en ce que** le circuit d'évaluation définit les fréquences en permanence.

5. Dispositif selon l'une des revendications précédentes, **caractérisé en ce que** l'ensemble de détecteurs d'accident (B1 à B4) présente plus d'un détecteur d'accident (B1 à B4) et **en ce que** le circuit d'évaluation pondère et calcule la moyenne des fréquences des deuxièmes signaux de chacun des détecteurs d'accident.

6. Dispositif selon la revendication 5, **caractérisé en ce que** le circuit d'évaluation exécute la pondération en fonction de la longueur des deuxièmes signaux cumulés.

7. Dispositif selon l'une des revendications précédentes, **caractérisé en ce que** l'ensemble de détecteurs d'accident (B1 à B4) présente des détecteurs inertiels et de préférence des détecteurs d'accélération.

8. Dispositif selon l'une des revendications 1 à 6 qui précèdent, **caractérisé en ce que** l'ensemble de détecteurs d'accident présente des détecteurs d'impact.

9. Procédé de déclenchement de moyens (PS) de protection des personnes, dans lequel un ensemble de détecteurs d'accident (B1 à B4) forme un premier signal, **caractérisé en ce que**
les moyens (PS) de protection des personnes sont déclenchés en fonction de la fréquence (f) d'un deuxième signal dérivé du premier signal,
**en ce que** la fréquence est déterminée en fonction d'une première longueur d'une première évolution du deuxième signal et de la deuxième longueur d'une deuxième évolution d'un deuxième signal cumulé.

10. Procédé selon la revendication 9, **caractérisé en ce que** la première et la deuxième longueur sont déterminées en fonction de la somme des différences de valeurs successives du première signal et du deuxième signal cumulé.

11. Procédé selon les revendications 9 ou 10, **caractérisé en ce que** la fréquence (f) est déterminée en formant le quotient de la première et de la deuxième longueur.

12. Procédé selon l'une des revendications 9 à 11, **caractérisé en ce que** la fréquence (f) est déterminée en permanence.

13. Procédé selon l'une des revendications 9 à 12, **caractérisé en ce qu'**au cas où plusieurs détecteurs d'accident sont prévus, les fréquences des deuxièmes signaux de chacun des détecteurs d'accident sont pondérées et leur moyenne est formée.

14. Procédé selon la revendication 13, **caractérisé en ce que** la pondération est réalisée en fonction de la longueur des deuxièmes signaux cumulés.

## Fig. 1

B1

B2

B3

B4

10

PS

ABS6

K

## Fig. 2a

20 — B1

21 — Σ

22 — L

25 — f

23 — ∫

24 — Σ

201 — μ

203 — f

204 — B2

26 — Σ

29 — L

f

202 — μ

27 — ∫

28 — Σ

200

## Fig. 2b

205 — B1

206 — Σ

207 — + Add +

215 — L

216 — f

208 — ∫

209 — Σ

211 — Σ

210 — B2

214 — + Add +

212 — ∫

213 — Σ

**Fig. 3**

**Fig. 4**

## Fig. 5

## Fig. 6

## Fig. 7

## Fig. 8

**Fig. 9**

Fig. 10

100Hz
150Hz
200Hz
250Hz
300Hz
350Hz
400Hz
450Hz

450
400
350
300
250
200
150
100
50

0    0.002   0.004   0.006   0.008   0.01   0.012   0.014   0.016   0.018   0.02

[s]

101

100

Fig. 11

AZT16
AZT16
ODB32
ODB40
ODB56
ODB64
ODB64
ODB64
ODB64
ODB64
ODB64

[Hz]

[s]

111

110

350
300
250
200
150
100
50
0

0   0.005   0.01   0.015   0.02   0.025   0.03   0.035   0.04   0.045   0.05

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004042467 A1